# DEMANDE DE BREVET EUROPEEN

(11) **EP 4 576 042 A1**
(43) Date de publication de la demande: **25.06.2025**
(21) Numéro de dépôt: 24219525.3
(22) Date de dépôt: 12.12.2024
(51) Int. Cl.: G08G 1/052, G08G 1/0967, B60W 30/14

(54) **PROCÉDÉ DE MISE À JOUR, PAR UN SYSTÈME DE GESTION EMBARQUÉ DANS UN VÉHICULE, DE VITESSES LIMITE RÉGLEMENTAIRES**

(30) Priorité: 21.12.2023 FR 2314848
(71) Demandeur: Ampere SAS, 92100 Boulogne-Billancourt (FR)
(72) Inventeur: ZABI, Said, Guyancourt (FR)
(74) Mandataire: Renault Group

(57) **Abrégé**

Procédé de mise à jour, par un système de gestion (100) embarqué dans un véhicule, de vitesses limite réglementaires en fonction d'une chaussée sur laquelle ledit véhicule circule, ledit procédé comprenant une étape (106) de réception, par ledit système de gestion (100), depuis une unité distante (108), de données relatives auxdites vitesses limites par nature de chaussée, et une étape (110) de chargement desdites données dans une mémoire (112), dite de référence, dudit système de gestion (100).

## Description

L'invention concerne un procédé de mise à jour, par un système de gestion embarqué dans un véhicule, de vitesses limite réglementaires en fonction d'une chaussée sur laquelle ledit véhicule circule. L'invention concerne également un procédé de détermination de vitesses limite autorisées, exploitant les vitesses limite réglementaires obtenues par ledit procédé de mise à jour.

Dans ce domaine, il est connu de déterminer la vitesse limite autorisée correspondant à un tronçon de route sur lequel un véhicule circule. Pour cela, le véhicule exploite des images fournies par une caméra permettant de détecter des panneaux de signalisation. Il peut de la sorte en déduire une vitesse limite autorisée explicite, à partir de panneaux de limitation de vitesse, ou implicite, à partir d'autres panneaux tels que des panneaux d'entrée ou de sortie d'une agglomération. Dans ce dernier cas, la détection du panneau est associée à une information sur la vitesse limite réglementaire correspondante, stockée dans une mémoire embarquée dans le véhicule. Plus généralement, il a déjà été proposé de déterminer la nature d'une chaussée sur laquelle un véhicule circule à partir de différentes informations, voire en exploitant des technologies d'intelligence artificielle, puis d'utiliser des informations reliant la nature de la chaussée à une vitesse réglementaire correspondante.

Un inconvénient d'une telle solution est que l'information sur la vitesse limite autorisée peut devenir obsolète, en particulier si une législation sur les vitesses limite réglementaires change dans telle ou telle juridiction. En effet, dans l'exemple donnée, si la vitesse limite réglementaire dans une agglomération change, l'information sur la vitesse limite autorisée qui pouvait être déduite de l'information fournie par les caméras n'est plus à jour.

De façon alternative ou complémentaire, il est connu d'exploiter un système de géolocalisation fournissant des informations sur l'emplacement du véhicule et un système de cartographie, embarqué dans le véhicule, comprenant des informations sur l'emplacement des routes, rues ou voies, susceptibles d'être empruntées par ledit véhicule. Ledit système de cartographie comprend en outre des informations sur la vitesse limite autorisée, associée à chaque route, rue ou voie répertoriée. De la sorte, en combinant les informations sur l'emplacement du véhicule, fournies par le système de géolocalisation, et les informations fournies par le système de cartographie, il est possible de connaître la vitesse limite autorisée à l'endroit où le véhicule circule.

Un inconvénient de telles solutions est que les systèmes de cartographies présentent un coût qui peut être jugé incompatible avec des véhicules de certaines gammes. Un autre inconvénient est que les informations fournies peuvent elles aussi devenir obsolètes, si la législation sur les vitesses limite réglementaires change.

L'invention a pour objectif de pallier au moins en partie les inconvénients précédents.

L'invention concerne en ce sens un procédé de mise à jour, par un système de gestion embarqué dans un véhicule, de vitesses limite réglementaires en fonction d'une chaussée sur laquelle ledit véhicule circule, ledit procédé comprenant une étape de réception, par ledit système de gestion, depuis une unité distante, de données relatives auxdites vitesses limites par nature de chaussée, et une étape de chargement desdites données dans une mémoire, dite de référence, dudit système de gestion.

L'invention permet ainsi, grâce à un chargement à distance des informations nécessaires, sous la forme de données de poids limité, à savoir les vitesses limites par nature de chaussée, de disposer des informations pertinentes, à jour, en local dans le véhicule, sans avoir recours à des solutions coûteuses et lourdes en capacité de chargement et/ou de stockage de données telles que des systèmes de cartographies et/ou qui risqueraient de ne plus être à jour.

Selon différentes caractéristiques supplémentaires de l'invention, qui pourront être prises ensemble ou séparément et qui forment autant de modes de réalisation de l'invention:
- lesdites vitesses limite réglementaires se présentent sous forme d'un vecteur, pour un type de véhicule et une entité géographique donnés,
- lesdites vitesses limite réglementaire sont sous forme d'une matrice, pour une entité géographique donnée,
- une ligne et/ou une colonne de ladite matrice forment un dit vecteur,
- ladite unité distante comprend un serveur partagé hébergeant lesdites données,
- ledit procédé comprend une étape de requête en chargement desdites données, envoyée par ledit système de gestion audit serveur,
- ledit procédé comprend une étape de notification audit système de gestion d'une mise à disposition d'une nouvelle version desdites données dans ledit serveur,
- ledit procédé comprend une étape d'interrogation du serveur par ledit système de gestion pour vérifier une différence entre les données présentes dans le serveur et les données présentes dans la mémoire de référence,
- ladite étape d'interrogation est exécutée périodiquement,
- ledit système de gestion comprend un premier calculateur, configuré pour une communication dudit système de gestion avec un environnement extérieur au véhicule, et un deuxième calculateur, configuré pour déterminer ladite vitesse limite correspondant à ladite nature de chaussée, ladite mémoire de référence étant configurée pour être exploitée par ledit deuxième calculateur.
- ladite étape de chargement des données dans la mémoire de référence comprend une étape de transmission desdites données entre les premier et deuxième calculateurs,
- ledit procédé comprend une étape d'envoi d'une information d'acquittement dudit deuxième calculateur audit premier calculateur, suite à un renouvellement des données dans ladite mémoire de référence.

L'invention concerne aussi un procédé de détermination, par un système de gestion embarqué dans un véhicule, de vitesses limite autorisées en fonction d'une nature de chaussée sur laquelle ledit véhicule circule, ledit procédé de détermination exploitant les vitesses limite réglementaires fournies par le procédé de mise à jour décrit plus haut.

Selon différentes caractéristiques supplémentaires de l'invention, qui pourront être prises ensemble ou séparément et qui forment autant de modes de réalisation de l'invention:
- ledit procédé de détermination comprend une étape d'acquisition d'informations permettant une détection de la nature de la chaussée,
- ledit procédé de détermination comprend une étape de calcul de la vitesse limite autorisée à partir de la détection de la nature de la chaussée et d'une valeur de ladite vitesse limite réglementaire associée à ladite nature de la chaussée d'après les données présentes dans ladite mémoire de référence.

L'invention concerne encore :
- un système de gestion embarqué dans un véhicule automobile comprenant des éléments matériels et/ou logiciels mettant en oeuvre l'un et/ou l'autre des procédés de mise à jour ou de détermination décrits plus haut, notamment des éléments matériels et/ou logiciels conçus pour mettre en oeuvre l'un et/ou l'autre desdits procédés,
- un système de gestion embarqué dans un véhicule comprenant des moyens de mise en oeuvre de l'un et/ou l'autre des procédés de mise à jour ou de détermination décrits plus haut,
- un véhicule automobile comprenant ledit système de gestion,
- un produit programme d'ordinateur comprenant des instructions de code de programme enregistrées sur un support lisible par ordinateur pour mettre en oeuvre les étapes de l'un et/ou l'autre des procédés de mise à jour ou de détermination décrits plus haut, lorsque ledit programme fonctionne sur un ordinateur,
- un produit programme d'ordinateur téléchargeable depuis un réseau de communication et/ou enregistré sur un support de données lisible par un ordinateur et/ou exécutable par un ordinateur, comprenant des instructions qui, lorsque le programme est exécuté par l'ordinateur, conduisent celui-ci à mettre en oeuvre l'un et/ou l'autre des procédés de mise à jour ou de détermination décrits plus haut
- un support d'enregistrement de données, lisible par un ordinateur, sur lequel est enregistré un programme d'ordinateur comprenant des instructions de code de programme de mise en oeuvre de l'un et/ou l'autre des procédés de mise à jour ou de détermination décrits plus haut,
- un support d'enregistrement lisible par ordinateur comprenant des instructions qui, lorsqu'elles sont exécutées par un ordinateur, conduisent celui-ci à mettre en oeuvre l'un et/ou l'autre des procédés de mise à jour ou de détermination décrits plus haut.
- un dispositif de traitement de données comprenant des moyens de mise en oeuvre du procédé de mise à jour ou du précédé de détermination décrits plus haut,
- un programme d'ordinateur comprenant des instructions qui, lorsque le programme est exécuté par des moyens de traitement numérique, conduisent ceux-ci à mettre en oeuvre le procédé de mise à jour ou le procédé de détermination décrits plus haut,
- un support lisible par des moyens de traitement numérique comprenant des instructions qui, lorsqu'elles sont exécutées par des moyens de traitement numérique, conduisent ceux-ci à mettre en oeuvre le procédé de mise à jour ou le procédé de détermination décrits plus haut,
- un signal d'un support de données, portant le produit programme d'ordinateur défini précédemment.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés parmi lesquels :
[Fig 1] illustre de façon schématique un exemple de réalisation du procédé de mise à jour conforme à l'invention ;
[Fig 2] illustre sous forme de tableau un exemple de structuration des informations exploitées pour la mise en oeuvre du procédé de mise à jour conforme à l'invention ;
[Fig 3] illustre de façon schématique un exemple de structuration des données transmises selon le procédé conforme à l'invention ;
[Fig 4] illustre sous la forme d'un organigramme une étape d'un exemple de mise en oeuvre du procédé conforme à l'invention.

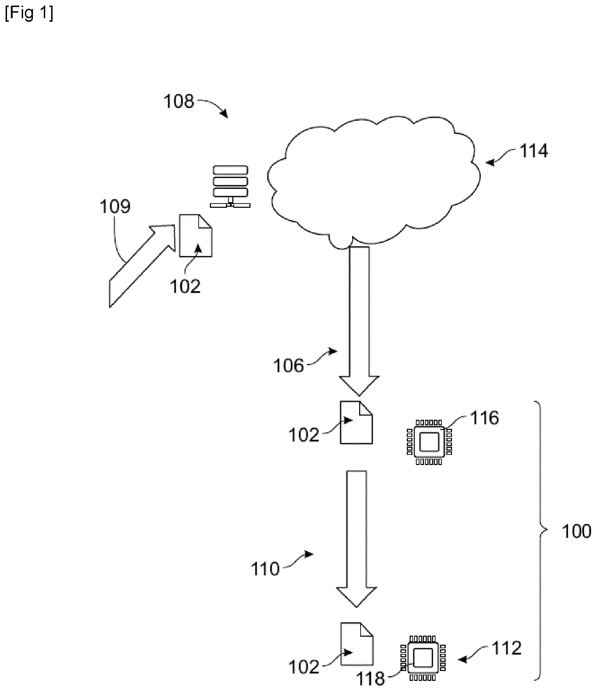

Comme illustré à la figure 1, l'invention concerne un procédé de mise à jour, par un système de gestion 100 embarqué dans un véhicule, d'informations 102 relatives à des vitesses limite réglementaires en fonction d'une chaussée sur laquelle ledit véhicule circule. Elle a en particulier vocation à s'appliquer avec des véhicules configurés pour mettre en oeuvre un procédé de détermination de la nature de ladite chaussée, selon différentes catégories susceptibles de correspondre à une vitesse réglementaire donnée. Un exemple de tel procédé de détection est décrit plus loin.

Ledit procédé de mise à jour selon l'invention comprend une étape 106 de réception, par ledit système de gestion, depuis une unité distante 108, de données, lesdites données comprenant lesdites vitesses limites par nature de chaussée, et une étape 110 de chargement desdites données dans une mémoire 112, dite de référence, dudit système de gestion 100.

De la sorte, pour les véhicules dans lesquels l'information sur la nature de la chaussée sur laquelle ledit véhicule circule est disponible, les informations nécessaires à la détermination de la vitesse limite autorisée, à savoir les données relatives aux vitesses limites réglementaires par nature de chaussée, et seulement celles-ci, sont téléchargées. On dispose ainsi par une transmission d'un nombre limité de données, des informations pertinentes, en local dans le véhicule, à jour, pour déterminer la vitesse limite applicable à la portion de chaussée empruntée par le véhicule. L'invention permet donc d'éviter d'exploiter des données obsolètes, ceci sans avoir à télécharger des cartographies complètes ou sans immobiliser le véhicule pour modifier le paramétrage de ces données dans le cas de véhicules où elles seraient enregistrées, en dur, dans une mémoire du véhicule.

Comme illustré à la figure 1, en cas de changement de réglementation relatives aux vitesses limites autorisées, les informations correspondantes sont mises en forme et stockées dans ladite unité distante 108. Par unité distante, on entend une unité fixe, non embarqué dans le véhicule. Ladite unité distante 108 comprend, par exemple un système de serveurs partagés 114, hébergeant lesdites données. Il pourra s'agir d'un système de serveurs ouvert et librement accessible ou lié au fabricant du véhicule. Lesdites informations sont, par exemple, disponibles dans un format numérique et téléchargées dans l'unité distante 108, selon la flèche repérée 109, ou saisies par un opérateur dans ladite unité distante 108.

Ledit procédé de mise à jour comprend en outre, par exemple, une étape de requête en chargement desdites données, envoyée par ledit système de gestion 100 audit serveur 114. Selon un premier mode de réalisation, une telle étape intervient périodiquement. De façon alternative ou complémentaire, ladite étape de requête intervient en cas d'occurrence d'un événement déterminé, par exemple en cas de mise à disposition d'une nouvelle version desdites données dans le serveur 114.

Dans ce cas, ledit procédé de mise à jour comprend avantageusement une étape de notification audit système de gestion 100 d'une mise à disposition d'une nouvelle version desdites données dans ledit serveur 114. Ladite étape de requête en chargement des données intervient alors avantageusement en réaction à une réception de ladite notification.

Toujours de façon alternative ou complémentaire, ledit procédé comprend une étape d'interrogation du serveur 114 par ledit système de gestion 100 pour vérifier une différence entre les données présentes dans le serveur 114 et les données présentes dans la mémoire de référence 112. Ladite étape d'interrogation est exécutée, par exemple, de façon périodique.

Ledit système de gestion 100 comprend un premier calculateur 116, configuré pour une communication dudit système de gestion 100 avec un environnement extérieur au véhicule, notamment selon des protocoles normés de communication de réseaux sans fil. Ledit premier calculateur est configuré pour échanger avec ladite unité distante 108.

Ledit système de gestion 100 comprend en outre un deuxième calculateur 118, configuré pour générer ladite vitesse limite correspondant à ladite nature de chaussée. Ledit deuxième calculateur 118 exploite pour cela les données contenues dans ladite mémoire de référence 112. Ledit deuxième calculateur 118 est configuré pour échanger des données avec ledit premier calculateur 116, notamment par l'intermédiaire d'un bus de données CAN (selon l'acronyme anglais Controller Area Network).

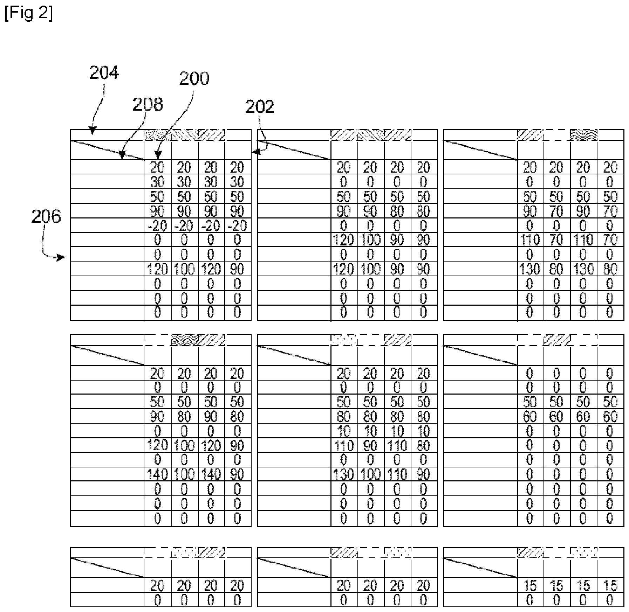

Comme illustré à la figure 2, lesdites informations se présentent, par exemple, sous forme d'un vecteur 200, pour un type de véhicule 202 et une entité géographique 204 donnés. Plus précisément, ici, lesdites informations sont sous forme de matrices 206, pour une entité géographique donnée. Une ligne et/ou une colonne de ladite matrice forment un dit vecteur 200.

Selon l'exemple de réalisation illustré, les entités géographiques 204 sont des pays et, à chaque pays correspond une matrice 206 avec les informations par type de véhicule M1, M2, N1, N2, en colonne, et les informations par nature de chaussée, en ligne. Chaque cellule des matrices comprend, pour le pays correspondant à la matrice, la valeur de la vitesse réglementaire pour la nature de chaussée et le type de véhicule correspondant.

Les natures de chaussée 208 utilisées comprennent les :
- voie piétonne,
- voie cycliste,
- voie urbaine,
- voie rurale, premier cas (vitesse obligatoire),
- voie rurale, deuxième cas (différence entre vitesse obligatoire et vitesse préférable),
- voie expresse, premier cas (vitesse été),
- voie expresse, deuxième cas (différence entre vitesse été et vitesse hiver),
- autoroute, premier cas (vitesse été),
- autoroute, deuxième cas (différence entre vitesse été et vitesse hiver).

Lesdites informations peuvent aussi comprendre des valeurs de vitesse permettant de moduler les vitesses limite réglementaires en début et/ou fin de mois.

Lesdites données échangées entre l'unité distante 108 et le premier calculateur 116 le sont à partir d'une telle structuration des informations. Elle permet d'optimiser le poids de données téléchargées dans le véhicule.

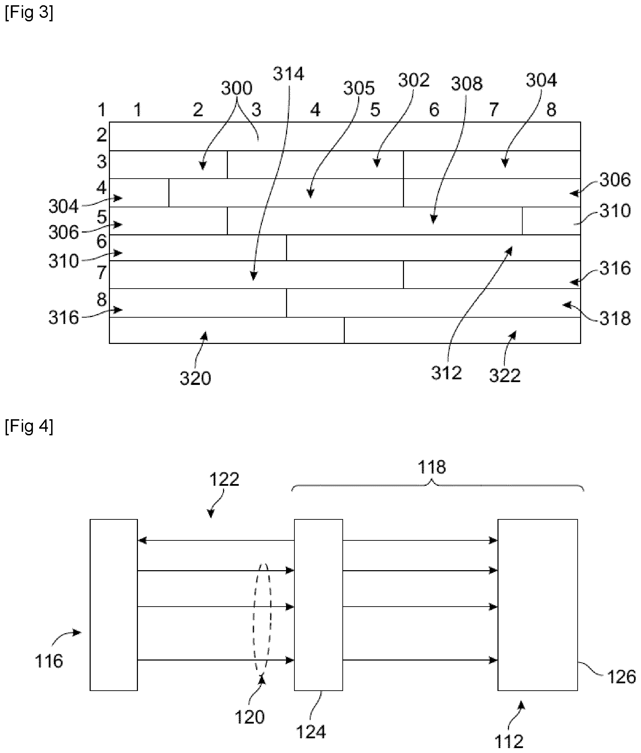

Comme illustré à la figure 3, les trames de données destinées à être utilisées dans les échanges sur le bus de données CAN comprennent un champ de données structuré en segments de dix bits pour un code pays 300, trois bits pour le type de véhicule 302, quatre bits pour une valeur de vitesse limite réglementaire pour les voies piétonnes 304, quatre bits pour une valeur de vitesse limite réglementaire pour les voies cycliste 305, cinq bits pour une valeur de vitesse limite réglementaire pour les voies urbaines 306, cinq bits pour une valeur de vitesse limite réglementaire pour les voies rurales, premier cas 308, quatre bits pour une valeur de vitesse limite réglementaire pour les voies rurales, deuxième cas 310, cinq bits pour une valeur de vitesse limite réglementaire pour les voies expresses, premier cas 312, cinq bits pour une valeur de vitesse limite réglementaire pour les voies expresses, deuxième cas 314, six bits pour une valeur de vitesse limite réglementaire pour les autoroutes, premier cas 318, cinq bits pour une valeur de vitesse limite réglementaire pour les autoroutes, deuxième cas 320 , quatre bits pour les valeurs de vitesse permettant de moduler les vitesses limite réglementaires en début de mois 320 et quatre bits pour les valeurs de vitesse permettant de moduler les vitesses limite réglementaires en fin de mois 322.

On constate que lesdits segments ne comprennent en tout que soixante-quatre bits si bien qu'en une seule trame, au format CAN, l'ensemble des informations nécessaires sont fournies à la mémoire de référence 112, avec une résolution satisfaisante.

Comme illustré à la figure 4, ladite étape 110 de chargement des données dans la mémoire de référence 112 comprend une étape 120 de transmission desdites données entre les premier et deuxième calculateurs 116, 118.

Préférentiellement, ledit procédé de mise à jour comprend en outre une étape 122 d'envoi d'une information d'acquittement dudit deuxième calculateur 118 audit premier calculateur 116, suite à un renouvellement des données dans ladite mémoire de référence 112. Ladite information d'acquittement contient un code d'erreur en cas de mise à jour défectueuse de ladite mémoire de référence 112. Elle est positive en cas de conformité avec la nouvelle version desdites données.

A la figure 4, on constate que ledit deuxième calculateur 118 comprend, par exemple, un processeur 124 et une caméra numérique 126. Ladite caméra 126 est destinée à capter et analyser des images dans l'environnement du véhicule. Comme développé plus bas, lesdites images sont destinées à être traitées pour la détermination de la nature de chaussée sur laquelle ledit véhicule circule. Ladite mémoire de référence 112 est située, notamment, au niveau de ladite caméra 126.

Comme évoqué plus haut, l'invention concerne également un procédé de détermination de vitesses limite autorisées en fonction d'une nature de chaussée sur laquelle ledit véhicule circule, ceci par ledit système de gestion de véhicule 100.

Pour cela, ledit procédé de détermination exploite les vitesses limite réglementaires fournies par le procédé de mise à jour décrit plus haut. Autrement dit, ledit procédé de détermination comprend, à titre d'étape préalable et/ou récurrente, la mise en oeuvre dudit procédé de mise à jour, par exemple lorsque le véhicule est à l'arrêt et/ou lors d'un démarrage du véhicule.

Ledit procédé de détermination comprend en outre, lors du roulage du véhicule, une étape d'acquisition d'informations permettant une détection de la nature de la chaussée et une étape de calcul de la vitesse limite applicable à partir de la détection de la nature de la chaussée et d'une valeur de ladite vitesse limite réglementaire associée à ladite nature de la chaussée d'après les données présentes dans la mémoire de référence 112.

Ladite étape d'acquisition d'information permettant la détection de la nature de la chaussée est réalisée, par exemple, à partir de différentes informations telles que, notamment, des informations obtenues par des moyens de traitement d'images, embarqués dans le véhicule, lesdits moyens de traitement d'images permettant de déterminer des informations relatives à la présence et la nature de panneaux de signalisation, un environnement du véhicule tel qu'un paysage environnant et/ou autres. Lesdits moyens de traitement d'image comprennent, par exemple, la caméra évoquée plus haut. Il s'agit encore, alternativement ou cumulativement, d'informations relatives à la vitesse, d'éventuels arrêts et/ou la trajectoire du véhicule et/ou des véhicules voisins, préférentiellement analysées sur une période de temps donnée.

Ledit procédé comprend en outre, par exemple, une étape d'exploitation desdites informations par un système d'intelligence artificielle, notamment à réseaux de neurones, pour déterminer la nature de la chaussée pami une liste prédéfinie de nature de chaussée possible, ladite liste étant stockée dans une mémoire. Il s'agit, notamment, de la liste évoquée plus haut en relation avec la figure 2.

En variante, l'information sur la nature de la chaussée est comprise dans une cartographie, ladite cartographie comprenant des informations sur l'emplacement des routes, rues ou voies, susceptibles d'être empruntées par ledit véhicule et répertoriant, la nature de chacune desdites voies plutôt que la vitesse limite réglementaire associée.

## Revendications

1. Procédé de mise à jour, par un système de gestion (100) embarqué dans un véhicule, de vitesses limite réglementaires en fonction d'une chaussée sur laquelle ledit véhicule circule, ledit procédé comprenant une étape (106) de réception, par ledit système de gestion (100), depuis une unité distante (108), de données relatives auxdites vitesses limites par nature de chaussée, et une étape (110) de chargement desdites données dans une mémoire (112), dite de référence, dudit système de gestion (100).

2. Procédé selon la revendication précédente dans lequel lesdites vitesses limite réglementaires se présentent sous forme d'un vecteur (200), pour un type de véhicule (202) et une entité géographique (204) donnés.

3. Procédé selon l'une quelconque des revendications précédentes dans lequel ladite unité distante (108) comprend un serveur partagé (114) hébergeant lesdites données.

4. Procédé selon la revendication précédente dans lequel ledit procédé comprend une étape de requête en chargement desdites données, envoyée par ledit système de gestion (100) audit serveur (114).

5. Procédé selon l'une quelconque des revendications précédentes dans lequel ledit système de gestion (100) comprend un premier calculateur (116), configuré pour une communication dudit système de gestion (100) avec un environnement extérieur au véhicule, et un deuxième calculateur (118), configuré pour générer ladite vitesse limite correspondant à ladite nature de chaussée, ladite mémoire de référence (112) étant configurée pour être exploitée par ledit deuxième calculateur (118).

6. Procédé selon la revendication précédente dans lequel ladite étape (110) de chargement des données dans la mémoire de référence (112) comprend une étape (120) de transmission desdites données entre les premier et deuxième calculateurs (116, 118).

7. Procédé de détermination, par un système de gestion embarqué dans un véhicule, de vitesses limite autorisées en fonction d'une nature de chaussée sur laquelle ledit véhicule circule, ledit procédé de détermination exploitant les vitesses limite réglementaires fournies par le procédé de mise à jour selon l'une quelconque des revendications précédentes.

8. Procédé selon la revendication 7 comprenant une étape d'acquisition d'informations permettant une détection de la nature de la chaussée.

9. Procédé selon la revendication 8 comprenant une étape de calcul de la vitesse limite applicable à partir de la détection de la nature de la chaussée et d'une valeur de ladite vitesse limite réglementaire associée à ladite nature de la chaussée d'après les données présentes dans la mémoire de référence (112).

10. Système de gestion embarqué dans un véhicule automobile comprenant des éléments matériels et/ou logiciels mettant en oeuvre l'un et/ou l'autre des procédés de mise à jour ou de détermination selon l'une quelconque des revendications précédentes.

11. Véhicule automobile selon la revendication précédente comprenant ledit système de gestion.

12. Produit programme d'ordinateur comprenant des instructions de code de programme enregistrées sur un support lisible par ordinateur pour mettre en oeuvre les étapes de l'un et/ou l'autre des procédés de mise à jour ou de détermination selon l'une quelconque des revendications 1 à 9, lorsque ledit programme fonctionne sur un ordinateur.

13. Support d'enregistrement de données, lisible par un ordinateur, sur lequel est enregistré un programme d'ordinateur comprenant des instructions de code de programme de mise en oeuvre de l'un et/ou l'autre des procédés de mise à jour ou de détermination selon l'une quelconque des revendications 1 à 9.
